Europäisches Patentamt

(19) European Patent Office

Office européen des brevets

(11) Publication number: **0 214 972**
**B1**

## (12) EUROPEAN PATENT SPECIFICATION

(45) Date of publication of patent specification: **10.01.90**

(51) Int. Cl.⁵: **F 16 H 3/08**

(21) Application number: **85902098.4**

(22) Date of filing: **16.05.85**

(88) International application number:
**PCT/GB85/00206**

(87) International publication number:
**WO 85/05426 05.12.85 Gazette 85/26**

(54) **CHANGE SPEED GEAR TRAINS.**

(30) Priority: **17.05.84 GB 8412613**
**17.05.84 GB 8412612**

(43) Date of publication of application:
**25.03.87 Bulletin 87/13**

(45) Publication of the grant of the patent:
**10.01.90 Bulletin 90/02**

(84) Designated Contracting States:
**DE FR GB IT SE**

(56) References cited:
EP-A-0 012 022
WO-A-83/02140
DE-A-2 816 244
FR-A-2 393 991
FR-A-2 510 492
GB-A- 916 969
US-A-2 729 980
US-A-2 991 661
US-A-3 465 609

(73) Proprietor: **RICARDO GROUP PLC**
**Bridge Works**
**Shoreham-by-Sea West Sussex BN43 5FG (GB)**

(72) Inventor: **Windsor-Smith, Claude P.**
**2 Old Launceston Road**
**Tavistock, Devon PL19 8LY (GB)**
Inventor: **Tailby, Raymond Alfred**
**40 Moat Road**
**Loughborough Leicestershire LE11 3PN (GB)**

(74) Representative: **Archer, Philip Bruce et al**
**Urquhart-Dykes & Lord Trinity Court Trinity**
**Street Priestgate**
**Peterborough Cambridgeshire PE1 1DA (GB)**

Courier Press, Leamington Spa, England.

## Description

This invention relates to change speed gear trains, particularly but not exclusively to such gear trains for use in the mass market for highway vehicles, including automobiles and trucks.

Presently available gear trains for highway vehicles include gearboxes of the manual shift and power shift kind. Manual shift gearboxes tend to be of the single layshaft kind with plate type input clutches. Power shift gearboxes are mainly of the epicyclic kind with torque converter input. Both are well established and have their merits, the merit of the former being its simplicity and reliability and low cost, the merit of the latter being its smooth operating characteristics.

Equally however, both such gearboxes are subject to significant limitations. The single layshaft manual shift gearbox is not readily adapted for power shifting. The epicyclic power shift gearbox is also subject to significant limitations including complexity, servicing difficulties, need for a torque converter, original cost, and limitations in the number of ratios available. This latter aspect precludes its use in all but relatively lightweight trucks, and automobiles. Neither gearbox provides an output shaft which is very conveniently placed for a front wheel drive where the gearbox mounts directly on the front-located engine.

Multi-layshaft gear trains of the kind employing multiple plate interleaved clutches have been proposed in many different layouts and designs. Most of these have been either for industrial usage or heavy duty vehicle transmissions of the kind employed in shuttle type vehicles of the crawler kind, or front end loaders. In our prior European patent EP—B—0 012 022 we have described a four-layshaft gearbox for buses and other public service vehicles. For such heavy duty applications the design constraints imposed by the mass road vehicle market are either not applicable or are much less stringent. These requirements include a paramount need for compactness, a multiplicity of ratios (particularly for trucks), the availability of power shift, relative simplicity of construction and ease of servicing with attendant minimum manufacturing and servicing costs, and fuel efficiency.

So far as multiple ratios and power shifting are concerned, many previously proposed multi-layshaft gearboxes may be able to meet these requirements to some extent, but in most cases these are very cumbersome and heavy and relatively expensive transmissions which are ruled out by the stringent space and economic factors imposed by highway vehicle design. In other cases, the number of available ratios is increased by the provision of added-on output stages whereby, for example, a basically four-ratio gear train is converted to an eight speed transmission (four low and four high). However, such an arrangement is basically unsuitable for use in vehicle transmissions for the truck and automobile market since the output stage is not integrated into the transmission as a whole and, for example, the clutch of such an add-on output stage is required to take the full transmission output torque, which in the case of a truck transmission may well be seven times the maximum engine torque. As a result, the clutch has to be of the dog type (possibly with synchronisation) which is a great disadvantage so far as power shift is concerned, or else the clutch has to be of relatively large diameter which is also very undesirable for space economy reasons.

In our prior International patent application WO—A—83/02140 (to which we specifically direct reference, including the prior art cited in the search report) there is disclosed a multi-layshaft gear train providing certain advantages over the above-mentioned disclosure in EP—B—0 012 022. These advantages include greater facility for provision of multiple transmission ratios and avoidance of the feedback of excessive rates of gear rotation when travelling at medium to high road speeds. Nevertheless, this prior proposal can be further improved with respect to simplicity of construction, provision of multiple ratio options, space requirements, and related factors.

In US—A—2 729 980 (Lammerz) there is disclosed a gear train as defined in the pre-characterising portion of claim 1 hereof.

An object of the present invention is to provide a change speed gear train and a highway vehicle incorporating same, offering improvements in relation to one or more of the factors identified above, or generally.

According to the invention there is provided a change speed gear train and a highway vehicle incorporating same, as defined in the accompanying claims.

In this specification and the claims, the expression "highway vehicle" means a vehicle such as a truck or automobile, which is intended for use primarily on highways or roads and which has a gear train providing at least four forward transmission ratios, and which is capable of sustained operation at the usual operating speeds of highway vehicles. The expression is intended to cover general purpose vehicles which fall within the above definition, but which by virtue of, for example, a four wheel drive, are also capable of operation over rough terrain.

In embodiments described below a change speed gear train comprises a main shaft assembly having gears rotatable about a common axis. One or two layshafts are grouped around the main shaft and parallel thereto. The, or each, layshaft has layshaft gears in constant mesh with the gears on the main shaft assembly. Selectively actuatable clutch means is provided to effect torque changes. The assembly of the central shaft and the layshaft and their associated gears provide primary and secondary stages of torque variation. Each of the stages includes at least two selectable torque paths. The stages are arranged in series (so that the torque resulting from one stage necessarily passes through the other stage) whereby a minimum of four selectable torque paths providing a graded sequence of torque changes are provided between drive input and drive output shafts.

One of said primary and secondary stages of torque variation is provided by at least two independently actuatable multiple interleaved plate type clutches and associated constant mesh change speed gear pairs. One gear of each of the pairs is on the same layshaft and the other is on the main shaft. Each clutch is associated with its own one of said change speed gear pairs. The clutches are independently actuatable to cause torque to be transmitted through the respective pair of change speed gears. This provides two torque paths for said one stage of torque variation. In the embodiment this arrangement enables two, three or more transmission ratios to be obtained conveniently from just one of the stages of torque variation, whereby a relatively large number of transmission ratios can be obtained conveniently and economically. Three torque paths can be obtained by merely providing a direct drive clutch between the mainshaft gears of the two gear pairs. Four ratios could be obtained by adding a further gear pair and an associated clutch.

In the embodiment, the gear train provides a graded sequence of transmission ratios as required by highway vehicles to meet varying road and load conditions. The clutches in the embodiment are all of the multiple plate kind actuated by fluid pressure actuators under the control of automatic ratio changing equipment which senses vehicle/transmission parameters and changes ratios by varying the fluid pressure supplied to the relevant clutches. Power shifting, being a refinement of automatic ratio changing, provides that the timing of the clutch actuation is such that the disengagement of one clutch with regard to the engagement of the next clutch is timed to provide substantially no interruption of power flow.

The gear train is arranged so that stage-wise torque increase occurs, whereby the clutches are generally not required to transmit the full gear train output torque. In many cases, the clutch means are mounted on the layshafts. The lubrication of the clutch plates is provided by a pressurised lubricant feed via suitable ducts, some of which extend length-wise of the layshafts. This arrangement enables retardation of the transmission to be provided by partial engagement of an additional transmission ratio not in use for transmission purposes.

In the embodiments, where the gearbox width is to be minimised, then a single layshaft arrangement is preferred. Where gearbox length is to be minimised, two layshafts are preferred.

The embodiments provide a particularly convenient arrangement for use in a front wheel drive automobile. With either one or two layshafts, the final drive output from the gear train can be conveniently arranged at the same end as the input, but offset from it. In this way, where the vehicle has a front-mounted engine, the drive output from the gear train to the input of the differential drive unit connected to the front wheels is conveniently located at a reasonably central position between the front ground wheels. This avoids the need to provide a special countershaft for the purpose.

Embodiments of the invention will now be described by way of example with reference to the accompanying drawings in which:

Fig. 1 shows a partly-sectioned view of a change speed gear train according to the invention;

Fig. 2 shows an end elevation view on arrow II in Fig. 1;

Fig. 3 shows, separated from the gear train, the second of the two layshafts thereof;

Fig. 4 shows a schematic diagram of the gear train of Figs. 1 to 3;

Figs. 5 and 6 show, in views similar to those of Figs. 1 and 3, a second embodiment of the invention;

Fig. 7 shows a schematic diagram of the embodiment of Figs. 5 and 6;

Figs. 8 and 9 show sectional views through a third embodiment, Fig. 8 showing the gear train proper and Fig. 9 showing one of the two layshafts;

Fig. 10 shows a schematic diagram of the embodiment of Figs. 8 and 9;

Fig. 11 shows a schematic diagram of a modification of the embodiment of Figs. 8 to 10;

Fig. 12 shows a schematic diagram of a two layshaft gear train with coaxial input and output arrangements;

Fig. 13 shows a schematic diagram of a single layshaft gear train with coaxial input and output shafts;

Fig. 14 shows an axial section through a single layshaft gear train with various optional drive output arrangements indicated;

Fig. 15 shows a schematic diagram of the embodiment of Fig. 14; and

Figs. 16 and 17 show schematic diagrams of modifications of the embodiment of Figs. 14 and 15.

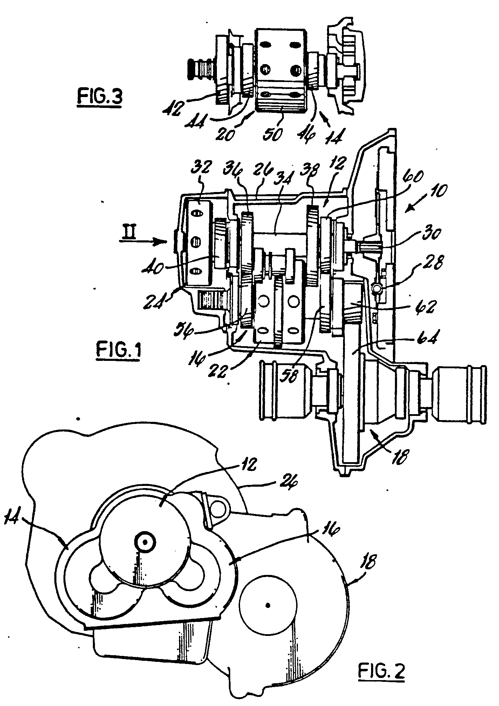

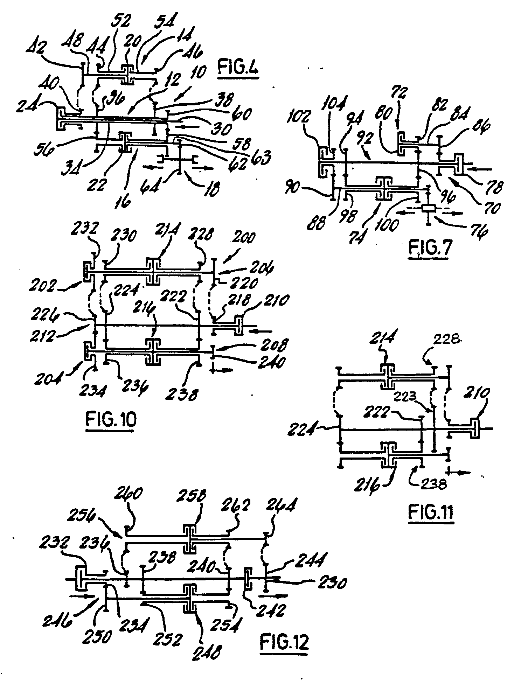

In the embodiment of Figs. 1 to 4, a gear train 10 comprises a main shaft assembly 12, and two layshafts 14, 16, arranged to drive a differential drive unit 18 of a transmission of a front wheel drive/front engine automobile.

Layshafts 14, 16 have double clutch assemblies 20, 22 and main shaft 12 has an input clutch 24, these clutches enabling the required transmission ratios to be selected. The gear train is located in a housing 26 containing an oil bath for the gears and the multiple interleaved plates of the clutch assemblies.

Not shown in Figs. 1 to 4 are systems for providing oil feed to the clutch plates and fluid pressure control (hydraulic or pneumatic) to the actuators of the clutches to effect ratio changes in sequence and under automatic control.

Drive input to the gear train is through a resilient coupling device 28 to a splined input shaft 30 extending lengthwise of main shaft 12 and coupled at its remote end to the housing 32 of input clutch 24, and hence to the radially outer set of clutch plates dogged to the housing.

The radially inner set of clutch plates are dogged to a tubular mainshaft portion 34 carrying mainshaft gears 36, 38.

Housing 32 of input clutch 24 is fixed to an input gear 40 which is in constant mesh with an input gear 42 of primary layshaft 14. Primary layshaft output gears 44, 46 mesh with the mainshaft gears 36, 38 respectively. Primary layshaft clutch 20 enables layshaft gears 44 or 46 to be drivably coupled to the layshaft input gear 42 through the layshaft inner shaft portion 48 which is connected to the housing 50 of clutch 20 and hence to the radially outer set of interleaved clutch plates dogged thereto. The corresponding radially inner sets of clutch plates are dogged to layshaft tubular outer shaft portions 52 and 54, and hence coupled to the layshaft output gears 44 and 46 respectively.

Secondary layshaft 16 is of similar construction to primary layshaft 14. Its input gears 56 and 58 are in constant mesh with, respectively, mainshaft gear 36, and with a further mainshaft gear 60 forming an integral part of a cluster gear with gears 36, 38. The output gear 62 of secondary layshaft 16 is coupled via an output shaft 63 and layshaft clutch 22 to layshaft gears 56 and 58. Output gear 62 meshes with the input gear 64 of differential drive unit 18.

In use, input clutch 24 is actuatable to cause torque to pass either direct from input shaft 30 to the mainshaft cluster gear 36, 38, 60, or else to pass indirectly to the cluster gear via primary layshaft 14, layshaft clutch 20 and layshaft gears 44 or 46. Hence there are effectively three ratios or torque paths provided by this first stage of torque variation.

Secondary layshaft 16 provides a secondary stage of torque variation. Two torque paths are available between the main shaft 12 and the secondary layshaft, the torque passing either via layshaft gear 56 or gear 58 according to appropriate actuation of double clutch assembly 22, the latter being connected to output gear 62 in the same way that clutch 20 is connected to its input gear 42.

Thus, the transmission 10 provides six transmission ratios overall in the very compact structure shown in Figs. 1 to 4.

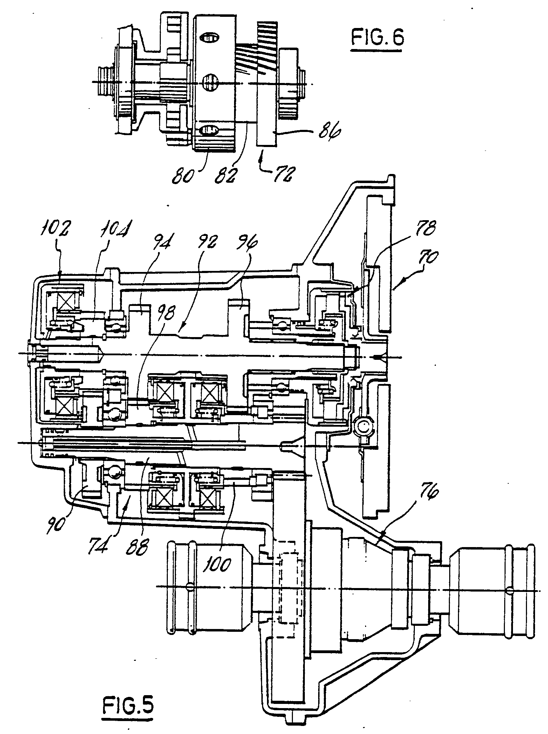

In the embodiment of Figs. 5, 6 and 7 the arrangement is generally similar to that of Figs. 1 to 4 in that the gear train 70 comprises two layshafts 72, 74 driving a front wheel drive unit 76. However, the input clutch 78 (corresponding to clutch 24 in Figs. 1 to 4) is located at the drive input end of the gear train and primary layshaft 72 comprises a single multi-plate clutch 80 having its radially outer set of clutch plates connected to the layshaft output gear 82 and its radially inner set of plates connected via the layshaft inner shaft 84 to the layshaft input gear 86.

Secondary layshaft 74 is constructed in a manner similar to that of secondary layshaft 16 in Figs. 1 to 4, but has an additional torque input via a layshaft inner shaft 88 and an associated input gear 90.

The main shaft 92 has gears 94, 96 meshing with the secondary layshaft input gears 98, 100 respectively. In addition a main shaft end clutch 102 of the multiple plate kind has its radially inner set of plates dogged to a tubular shaft carrying a third mainshaft output gear 104 in constant mesh with gear 90 on layshaft 74.

In use, six ratios are provided in the two torque variation stages provided by the layshaft 72 and 74. Two ratios being associated with the former and three with the latter, the third ratio of the secondary layshaft being due to the provision of mainshaft end clutch 102.

The gear train 70 operates in a similar manner to that of Figs. 1 to 4, the six ratios being controlled automatically. It is to be noted that this embodiment is slightly longer in the axial direction than that of Fig. 1.

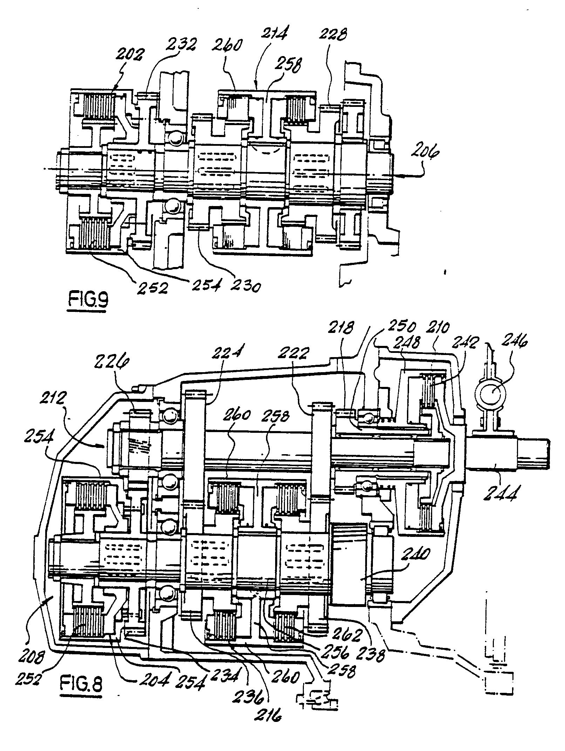

In the embodiment of Figs. 8, 9, and 10 there is shown another two-layshaft gear train 200 adapted for front wheel drive but which provides twelve transmission ratios instead of six.

The basic layout is similar to that of Figs. 1 to 4, but end clutches 202, 204 are provided on the primary and secondary layshafts 206, 208 and the input clutch 210 of mainshaft 212 is located at the input end of the gear train.

Layshaft clutches 214 and 216 correspond to clutches 20 and 22 of Figs. 1 to 4 with the addition of a layshaft inner shaft interconnecting the housing (and hence the outer set of clutch plates) of the double clutch and the inner set of clutch plates on the end clutches 202, 204.

The input gear 218 meshes with input gear 220 of primary layshaft 206. The mainshaft cluster gear comprises gears 222, 224 and 226 meshing with (on the primary layshaft 206) output gears 228 and 230, and end clutch gear 232. On secondary layshaft 208, the mainshaft gears mesh with end clutch gear 234 and input gears 236, 238. The secondary layshaft final output gear 240 meshes with a differential drive unit, as described above.

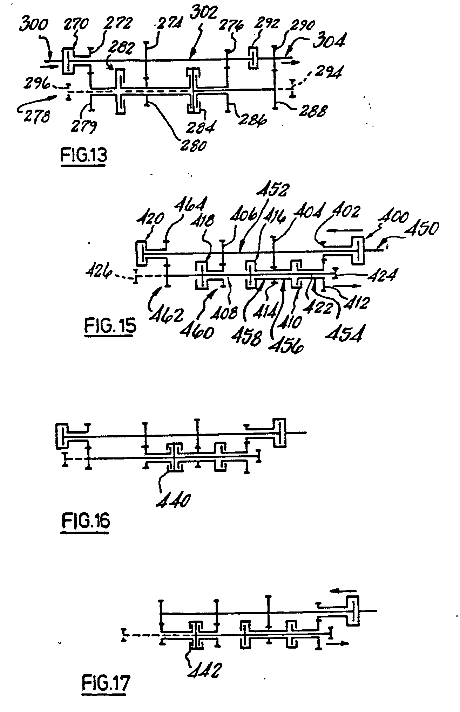

Figs. 8 and 9 show details of the construction and arrangement of the clutches of the gear train which are applicable also to other embodiments. Mainshaft input clutch 210 has its radially inner set of interleaved clutch plates 242 dogged to the input shaft 244 which is driven via a resilient coupling 246. The corresponding outer set of plates 242 is dogged to the clutch housing 248 and directly coupled to the mainshaft input gear 218 through a tubular shaft 250. Other input clutches in this specification are similarly constructed.

Layshaft end clutches 202, 204 have inner sets of plates 252 directly dogged to the layshaft inner shaft portions, and outer sets of plates 252 dogged via the clutch housing 254 to the layshaft end clutch gears 232, 234.

The structure of the double clutch assemblies 214, 216 is likewise representative of the other embodiments. As shown, the layshaft inner shaft portion 256 is connected via a radial web 258 to an annular clutch housing 260 to which the two sets of radially outer clutch plates 262 are dogged, the corresponding inner set being dogged to an annular sleeve directly connected to the relevant layshaft gear 236, 238 etc.

In this embodiment, primary layshaft 206 provides four torque paths between the input shaft and the main shaft. The secondary layshaft 208 provides three torque paths between the main shaft and the gear train output pinion 208, and hence the total number of ratios available is twelve.

In the embodiment of Fig. 11, the general structure and arrangement is as described above but with the omission of the layshaft end clutches 202, 204 and their associated constant mesh gears and the layshaft inner shaft portions connecting them to the double clutches 214, 216. Thus, this embodiment provides a primary stage of torque variation having three paths or ratios and a secondary stage providing two, whereby the total number of paths or ratios available is six.

Note that gear 228 on the primary layshaft meshes with an additional gear 223 on the mainshaft. Gear 222 on the mainshaft meshes only with gear 238 on the secondary layshaft and does not mesh with gear 228 on the primary layshaft. This arrangement provides more freedom of choice for the gear ratios.

In the embodiment of Fig. 12 mainshaft 230 has at one end an input clutch 232 acting between an input gear 234 and cluster gear 236, 238, 240 on the main shaft.

A main shaft output clutch 242 acts between cluster gear 240 and final output gear 244.

Primary layshaft 246 has a double clutch assembly 248 serving to selectively interconnect layshaft input gear 250 with layshaft output gears 252 and 254, these latter three gears meshing respectively with input gear 234 and mainshaft gears 238 and 240. This provides three torque paths or ratios in the primary stage of the gear train.

Secondary layshaft 256 comprises double clutch 258 and layshaft input gears 260, 262 and layshaft output gear 264, whereby three torque paths are available in the secondary stage of the gearbox. Thus, nine ratios overall are available, three more than would be the case if the drive output were taken from the secondary layshaft output gear 264 to (for example) a front wheel drive arrangement. The gear train of Fig. 12 is suitable for truck applications, for example, where the transmission layout is the traditional front engine/front gearbox with a propeller shaft driving the rear wheels.

The embodiments described above are all two-layshaft gear trains with the layshafts separated. The embodiments of Figs. 13 to 17, which follow are all single layshaft gear trains in which two layshafts are arranged coaxially end-to-end from a single layshaft.

Turning now to the embodiment of Fig. 13, it will be noted that this is a single layshaft gear train with coaxial input and output.

The first stage of torque variation comprises everything to the left of and including gear pair 274, 280. The second stage of torque variation comprises everything to the right of and including gear pair 274, 280. By making gear pair 274, 280 common to both stages of torque variation, this embodiment of the invention (and all the other single layshaft embodiments) reduces by two the total number of gear wheels in the gear train. In effect, the second layshaft is moved so as to be co-axial with the first layshaft and is drivably connected to it by a common gear wheel 280. Thus, layshaft 278 has a primary portion comprising everything to the left of and including gear 280, and a secondary portion comprising everything to the right of and including gear 280.

Input clutch 270 acts between an input shaft 300 and the main shaft 302. An output clutch 292 acts between main shaft 302 and an output shaft 304.

The primary portion of layshaft 278 has gears 279 and 280 meshing respectively with input shaft gear 272 and main shaft gear 274. Layshaft clutch 282 serves to drivably interconnect layshaft gears 279 and 280.

The secondary portion of layshaft 278 comprises a dual clutch 284, layshaft gears 280, 286 meshing respectively with main shaft gears 274, 276, and layshaft gear 288 meshing with output gear 290. Dual clutch 284 serves to selectively drivably connect gear 288 with either gear 286 or gear 280.

Six transmission ratios overall are provided by virtue of two torque paths from input shaft 300 to mainshaft 302, and three torque paths from mainshaft 302 to output shaft 304.

Fig. 13 also shows in dotted lines alternative output arrangements at each end of layshaft 278, output gear 294 providing an offset output at the non-drive input end, and output gear 296 providing the front wheel drive configuration.

The single and double clutches in this embodiment are constructed substantially as described above in the previous embodiments. With reference to the schematic diagrams, such as Fig. 13 in this application generally, it must be understood that the diameters of the pinions indicated are not necessarily drawn to scale and for questions of drive ratio and the like reference must be made to the assembly drawings, such as Figs. 8 and 9.

Turning now to the embodiment of Figs. 14 and 15, this is a single layshaft six ratio front wheel drive configuration gear train employing individual clutches on the layshaft instead of double clutches.

Input clutch 400 acts between input shaft 450 and the main shaft 452.

The primary portion of the single layshaft comprises the tubular shafts 454, 456 which surround output shaft 422 and connect gear 412 to gear 414 via layshaft clutch 410, and includes gears 412, 414.

The secondary portion of the single layshaft comprises tubular shaft 458 and shaft 408 which connect gear 414 to gear 462 via clutch 416 and includes gears 414, 460, 462 and clutches 416, 418.

Six transmission ratios overall are provided by virtue of two torque paths from input shaft 450 to main shaft 452 namely clutch 400 and path 402, 412, 454, 410, 456, 414, 416; and three torque paths from the main shaft 452 to the output shaft 422, namely gear pair 404, 414 and clutch 416, gear pair 406, 408 and clutch 418, gear pair 464, 462 and clutch 420.

An optional output at the opposite end 426 may also be provided where a straight through but offset drive arrangement is required. In Fig. 14, this output is indicated by the drive flange 428.

This embodiment operates in a substantially similar way to that of the preceding embodiment. End clutch 420 can be partially engaged in addition to the clutch engaged at any given time for transmission purposes to provide a retarder. The end clutch 420 can be conveniently supplied with coolant such as oil under pressure.

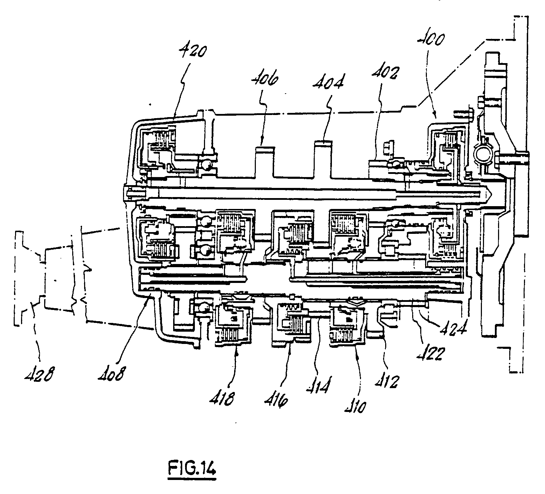

In the embodiments of Figs. 16 and 17, two of the clutch means have been combined into a double clutch assembly similar to that described above in connection with preceding embodiments. In Fig. 16, clutches 416 and 418 have been combined into a double clutch 440. In Fig. 17 end clutch 420 and clutch 418 have been combined into a double clutch 442, with corresponding modification of the shaft arrangements.

In all the single layshaft embodiments the principal advantage is that of compactness, arising from the use of one pair of gears common to both the primary and the secondary stages of torque variation, whereby a relatively large number of gear ratios is available from a relatively small number of gear wheels. This compactness is enhanced by the use of the double clutch assemblies. Moreover the gear trains described all offer the facility for automatic control and power shifting in a compact format suitable for the mass highway vehicle market and without the requirement for a torque converter and its associated expense and fuel inefficiency. Other advantages of the transmissions described will be apparent from the discussion in the preamble of this specification.

Although details of the automatic control system have not been shown in the drawings, such can be readily provided by means merely of fluid pressure conduits to the actuators of the individual clutch assemblies.

## Claims

1. A change speed gear train (10) for a highway vehicle comprising:
    an input shaft (30);
    an output shaft (63);
    a main shaft (12) having thereon main shaft gears (36, 38, 60) rotatable about a common axis;
    two layshafts (14, 16) rotatable about respective axes parallel to the axis of the main shaft and having layshaft gears (44, 46, 56, 58) in direct constant mesh with said main shaft gears together with selectively actuatable clutch means (20, 22, 24) to engage a torque path via selected constant mesh gear pairs;

the gear train providing primary and secondary stages of torque variation, each of said stages including at least two selectable torque paths, and said stages being arranged in series whereby a graded sequence of four torque changes is available between said input and output shafts;
    one of aid stages of torque variation being provided by at least two multiple interleaved plate type clutches (20) and associated constant mesh gear pairs (44, 36; 46, 38), one gear (44, 46) of each of said pairs being on the same layshaft (14) and the other gear (36, 38) of each pair being on the main shaft (12), each clutch being associated with its own one of said gear pairs, and the clutches being actuatable to cause torque to be selectively transmitted through the layshaft via either one (44, 36) or the other (46, 38) of said pairs of gears; and
    said two layshafts (14, 16) including a primary layshaft (14) to provide the sole layshaft torque path capable of transmitting drive between said input shaft (30) and said main shaft (12), and a secondary layshaft (16) to transmit drive between said main shaft (12) and said output shaft (63) and having secondary layshaft gears (56, 58) in constant mesh with said main shaft gears (36, 60) together with associated clutch means (22), to enable drive to be selectively transmitted onwards to said output shaft (63);
    characterised in that
    said main shaft (12) is co-axial with said input shaft (30), and clutch mans (24) acting therebetween provides a selectable direct torque path therebetween;
    an input gear (42) on said primary layshaft (14) is in constant mesh with a gear (40) drivably fixed to said input shaft; and
    at least two of said multiple interleaved plate-type clutches (210) of said layshaft (14) being independently actuable to provide at least four of said graded sequence of torque changes.

2. A gear train according to claim 1 characterised in that said two independently actuatable clutches (20, 22) associated with said same layshaft (14, 16) comprise a double multiple interleaved plate type clutch assembly mounted on said same layshaft and located between the associated layshaft gears (44, 46; 56, 58) thereon.

3. A gear train according to claim 2 characterised in that said double clutch (20) is located on said primary layshaft (14).

4. A gear train according to claim 3 characterised in that said gears (44, 46) of said primary layshaft associated with said double clutch (20) are mounted on layshaft portions (52, 54) extending outwardly from said double clutch, at least one (52) of said shaft portions being tubular and a layshaft input portion (48) of the primary layshaft extending through said tubular shaft portion and being connected to said double clutch.

5. A gear train according to claim 4 characterised in that said input gear (42) of said primary byshaft is located on said layshaft input portion (48) thereof.

6. A gear train according to claim 2 characterised in that said double clutch (22) is located on said secondary layshaft (16).

7. A gear train according to claim 6 characterised in that said gears of said secondary layshaft associated with said double clutch are mounted on layshaft portions extending outwardly from said double clutch, at least one of said layshaft portions being tubular, and a layshaft output portion of the layshaft extending through said tubular shaft portion and being connected to or forming itself said output shaft (63).

8. A gear train according to any one of the preceding claims characterised in that said layshafts (14, 16) and/or said main shaft (12) comprise an end clutch (24).

9. A gear train according to any one of the preceding claims characterised by an end clutch and an associated constant mesh gear mounted on said main shaft or on one of said layshafts to provide a selectable portion of said torque path through the gear train.

10. A gear train according to any one of the preceding claims characterised in that said output shaft (63) is directly connected to said secondary layshaft (16).

11. A gear train according to any one of the preceding claims characterised in that said output shaft (63) is positioned at the same end of the gear train as said input shaft (30) so as to be suitable to be coupled to a differential drive assembly of a front wheel drive road vehicle.

12. A gear train according to claim 2, or any one of the preceding claims when dependent upon claim 2, characterised in that said layshaft (14) associated with said double clutch assembly (20) comprises at least one tubular shaft (52, 54) and an least one inner shaft (48) extending through said outer shaft, said double clutch assembly comprising inner and outer sets of interleaved clutch plates, said inner shaft being coupled to said outer set or sets of clutch plates, and said outer tubular shaft or shafts being coupled to said inner clutch plates.

13. A gear train according to any one of the preceding claims characterised in that said primary and secondary layshafts are arranged co-axially and are directly drivably connected end-to-end to form a single layshaft (278).

14. A gear train according to claim 13 characterised in that said primary layshaft is drivably connected to said secondary layshaft by a common pinion (280).

15. A gear train according to claim 13 or claim 14 characterised in that said input and output shafts of the gear train are arranged co-axially with each other and with clutch means (270, 292) permitting direct drive therebetween.

16. A gear train according to claim 13 or claim 14 characterised in that said output shaft is positioned at the opposite end of the gear train from said input shaft so as to be suitable to couple through a fore/aft propeller shaft to a rear wheel drive assembly, and is coaxial with said single layshaft for direct drive therefrom, said output shaft being offset downwardly, in the working attitude of the assembly, from the main shaft, thereby reducing the requirement for housing said propeller shaft in a road vehicle body structure.

17. A gear train according to any one of the preceding claims characterised in that clutch means (24) providing a direct drive between said gear (40) on said input shaft (30) and said main shaft (12) is located outwardly, with respect to the gear train (10) as a whole, of said gear (40) on the input shaft.

18. A highway vehicle characterised by a drive transmission comprising a gear train according to any one of the preceding claims together with automatic or semi-automatic control equipment to effect ratio changes.

19. A vehicle according to claim 18 characterised in that the drive input to said gear train from the vehicle engine is through resilient coupling means (28).

**Patentansprüche**

1. Zahnradwechselgetriebe für ein Straßenfahrzeug mit:

einer Antriebswelle (30);

einer Abtreibswelle (63);

einer Hauptantriebswelle (12) mit Hauptantriebswellenrädern (36, 38, 60) darauf, die um eine gemeinsame Achse drehbar sind;

zwei Vorgelegewellen (14, 16), die um zugeordnete Achsen parallel zu der Achse der Hauptantriebswelle drehbar sind und Vorgelegeräder (44, 46, 56, 58) in direktem, konstantem Kämmeingriff bzw. im Synchroneingriff mit den Hauptantriebswellenrädern zusammen mit wahlweise betätigbaren Kupplungen (20, 22, 24) umfassen, um einen Drehmomentenpfad über ausgewählte Synchrongetriebe-Radpaare in Eingriff zu bringen;

wobei der Getreiebzug primäre bzw. antriebsseitige und sekundäre bzw. abtriebsseitige Drehmomentenvariationsstufen vorsieht, wobei jede der Stufen zumindest zwei wählbare Momentenpfade einschließt und die Stufen in Reihe angeordnet sind, so daß eine gestufte Folge von vier Drehmomentenwechseln zwischen der Antriebswelle und der Abstriebswelle zur Verfügung steht;

wobei eine der Drehmomentenvariationsstufen durch zumindest zwei Kupplungen (20) vom Typ mit vielfach ineinander geschachtelten Platten und zugeordneten Synchrongetrieberadpaaren (44, 36; 46, 38) vorgesehen ist, wobei ein Rad (44, 46) jedes der Paare auf derselben Vorgelegewelle (14) und das andere Rad (36, 38) jedes Paares auf der Hauptantriebswelle (12) ist, wobei jede Kupplung ihrem eigenen Paar der Radpaare zugeordnet ist und wobei die Kupplungen betätigbar sind, dafür zu sorgen, daß das Drehmoment wahlweise durch die Vorgelegewelle über das eine (44, 36) oder das andere (46, 38) der Radpaare übertragen wird; und

wobei die zwei Vorgelegewellen (14, 16) umfassen eine primäre Vorgelegewelle bzw. Antriebsvorgelegewelle (14) die den einzigen Vorgelegewellen-Drehmomentenpafad vorsieht, der Antrieb zwischen der Andriebswelle (30) und der Hauptantriebswelle (12) übertragen kann, und eine sekundäre Vorgelegewelle bzw. Abtreibsvorgelegewelle (16), um Antrieb zwischen der Hauptantriebswelle (12) und der Abtriebswelle (63) zu übertragen, sekundäre bzw. abtriebsseitigen Vorgelegesellenräder (56, 58), die im konstanten Kämmeingriff bzw. Synchroneingriff mit den Hauptantriebswellenrädern (36, 60) zusammen mit zugeordneten Kupplungen (22) stehen, um eine wahlweise Übertragung des Antriebs weiter zur Abtriebswelle (63) zu ermöglichen, dadurch gekennzeichnet, daß die Hauptantriebswelle (12) koaxial zu der Antriebswelle (30) liegt und die dazwischen wirksame Kupplung (24) einen wählbaren direkten Drehmomentenpfad dazwischen vorsieht, daß ein Antriebszahnrad (42) auf der Antriebsvorgelegewelle (14) in konstantem Kämmeingriff bzw. Synchroneingriff mit einem Zahnrad (40) ist, das auf der Antriebswelle antriebsmäßig befestigt ist, und daß zumindest zwei der Kupplungen (20) vom Typ mit vielfach ineinander geschachtelten Platten der Vorgelegewelle (14) unabhängig betätigbar sind, um zumindest vier der gestuften Folge von Drehmomentenwechseln vorzusehen.

2. Getriebe nach Anspruch 1, dadurch gekennzeichnet, daß die zwei unabhängig betätigbaren Kupplungen (20, 22), die derselben Vorgelegewelle (14, 16) zugeordnet sind, eine doppelte Kupplungsanordnung bzw. Zwischenkupplungsanordnung vom Typ mit vielfach ineinander geschachtelten Platten umfassen, die auf derselben Vorgelegewelle angebracht und zwischen den zugeordneten Vorgelegerädern (44, 46; 56, 58) darauf gelegen ist.

3. Getriebe nach Anspruch 2, dadurch gekennzeichnet, daß die Zwischenkupplung (20) auf der Antriebsvorgelegewelle (14) gelegen ist.

4. Getriebe nach Anspruch 3, dadurch gekennzeichnet, daß die Zahnräder (44, 46) der Antriebsvorgelegewelle die der Zwischenkupplung (20) zugeordnet sind, auf Vorgelegewellenteilen (52, 54) angebracht sind, die sich von der Doppelkupplung aus auswärts erstrecken, daß zumindest einer (52) der Wellenteile rohrförmig ist und daß sich ein Vorgelegewellen-Antriebsteil (48) der Antriebsvorgelegewelle durch den rohrförmigen Wellenteil erstreckt und mit der Doppelkupplung verbunden ist.

5. Getriebe nach Anspruch 4, dadurch gekennzeichnet, daß das Antriebsrad (42) der Antriebsvorgelegewelle auf dem Vorgelegewellen-Antriebsteil (48) von dieser gelegen ist.

6. Getriebe nach Anspruch 2, dadurch gekennzeichnet, daß die Zwischenkupplung (22) auf der Abtriebsvorgelegewelle (16) gelegen ist.

7. Getriebe nach Anspruch 6, dadurch gekennzeichnet, daß die Zahnräder der Abtriebsvorgelegewelle, die der Zwischenkupplung zugeordnet sind, auf Vorgelegewellenteilen angebracht sind, die sich von der Zwischenkupplung

aus nach außen erstecken, daß zumindest einer der Vorgelegewellenteilen rohrförmig ist und daß sich ein Vorgelegewellenabtriebsteil der Vorgelegewelle durch den rohrförmigen Wellenteil erstreckt und mit der Abtriebswelle (63) verbunden ist oder diese selber bildet.

8. Getriebe nach einem der vorhergehenden Ansprüche, dadurch gekennzeichnet, daß die Vorgelegewellen (14, 16) und/oder die Hauptantriebswelle (12) eine Endkupplung bzw. Stirnkupplung (24) umfassen.

9. Getriebe nach einem der vorhergehenden Ansprüche, gekennzeichnet durch eine Endkupplung bzw. Stirnkupplung und ein zugeordnetes Zahnrad mit konstantem Kämmeingriff bzw. Synchroneingriff, welches auf der Hauptantriebswelle oder einer der Vorgelegewellen angebracht ist, um eine wählbaren Teil des Drehmomentenpfades durch das Getriebe vorzusehen.

10. Getriebe nach einem der vorhergehenden Ansprüche, dadurch gekennzeichnet, daß die Abtriebswelle (63) mit der Abtriebsvorgelegewelle (16) direkt verbunden ist.

11. Getriebe nach einem der vorhergehenden Ansprüche, dadurch gekennzeichnet, daß die Abtriebswelle (63) an demselben Ende des Getriebezugs wie die Antriebswelle (30) positioniert ist, so daß diese geeignet ist, an eine Differentialanordnung eines vorderradangetriebenen Straßenfahrzeugs angekuppelt zu werden.

12. Getriebe nach Anspruch 2 oder einem der vorhergehenden Ansprüche und Anspruch 2, dadurch gekennzeichnet, daß die Vorgelegewelle (14), die der Zwischenkupplung (20) zugeordnet ist, zumindest eine rohrförmige Welle (52, 54) und zumindest eine Innenwelle (48), die sich durch die äußere Welle erstreckt, umfaßt, daß die Zwischenkupplungsanordnung eine innere und eine äußere Gruppe von ineinander geschachtelten Kupplungsplatten umfaßt, daß die Innenwelle an die äußere Gruppe oder Gruppen von Kupplungsplatten gekoppelt ist und daß die äußere rohrförmige Welle oder Wellen mit den inneren Kupplungsplatten gekoppelt sind.

13. Getriebe nach einem der vorhergehenden Ansprüche, dadurch gekennzeichnet, daß die Antriebs- und Abtriebsvorgelegewelle koaxial angeordnet und Ende an Ende direkt angetrieben verbunden sind, um eine einzige Vorgelegewelle (278) zu bilden.

14. Getriebe nach Anspruch 13, dadurch gekennzeichnet, daß die Antriebsvorgelegewelle mit der der Abtriebsvorgelegewelle durch ein gemeinsames Ritzel (180) antriebsmäßig verbunden ist.

15. Getriebe nach Anspruch 13 oder 14, dadurch gekennzeichnet, daß die Antriebs- und Abtriebswelle des Getriebes koaxial zueinander und mit Kupplungen (270, 292) angeordnet sind, um einen direkten Antrieb dazwischen zuzulassen.

16. Getriebe nach Anspruch 13 oder 14, dadurch gekennzeichnet, daß die Abtriebswelle an dem zu der Antriebswelle entgegengesetzten Ende des Getriebs positioniert ist, um durch eine

Antriebslängswelle mit einer Hinterradantriebesanordnung gekoppelt werden zu können und daß sie koaxial zu der einzigen Vorgelegewelle für einen direkten Antrieb von dieser ist, wobei die Abtriebswelle in der Arbeitsausrichtung der Anordnung von der Hauptantriebswelle abwärts versetzt ist, wodurch der Raumbedarf der Antriebswelle in einer Straßenfahrzeug-Karosserie verringert ist.

17. Getriebe nach einem der vorhergehenden Ansprüche, dadurch gekennzeichnet, daß die Kupplung (24), die einen direkten Antrieb zwischen dem Zahnrad (20) auf der Antriebswelle (30) und der Hauptantriebswelle (12) vorsieht, in Bezug auf den Getriebezug (10) als Ganzes außerhalb des Zahnrades (40) auf der Antriebswelle gelegen ist.

18. Straßenfahrzeug, gekennzeichnet durch ein Antriebskraftgetriebe mit einem Zahnradgetriebe nach einem der vorhergehenden Ansprüche in Verbindung mit einer automatischen oder halbautomatischen Steueranordnung, die die Übersetzungsverhältnisänderungen herbeiführt.

19. Fahrzeug nach Anspruch 18, dadurch gekennzeichnet, daß der Antriebseingang vom Fahrzeugmotor zum Getriebe durch eine elastische Kupplungseinrichtung (28) vorgesehen ist.

**Revendications**

1. Train d'engrenages de changement de vitesses (10) pour un véhicule routier rapide, comprenant:

un arbre d'entrée (30);

un arbre de sortie (63);

un arbre principal (12) portant des pignons d'arbre principal (36, 38, 60) qui peuvent tourner autour d'un axe commun;

deux arbres intermédiaires (14, 16) qui peuvent tourner autour d'axes respectifs parallèles à l'axe de l'arbre principal et qui portent des pignons d'arbre intermédiaire (44, 46, 56, 58) en engrènement constant direct avec lesdits pignons d'arbre principal, ainsi que des embrayages actionnables sélectivement (20, 22, 24) pour enclencher un chemin de couple passant par des paires choisies de pignons en engrènement constant;

le train d'engrenages fournissant des étages primaire et secondaire de changement de couple, chacun desdits étages comprenant au moins deux chemins de couple sélectables, et lesdits étages étant agencés en série de sorte qu'une séquence échelonnée de quatre changements de couple est disponible entre lesdits arbres d'entrées et de sortie;

l'un desdits étages de changement de couple comportant au moins deux embrayages du type à plaques multiples itercalées (20) et des paires associées de pignons en engrènement constant (44, 36; 46, 38), un pignon (44, 46) de chacune desdites paires étant sur le même arbre intermédiaire (14) et l'autre pignon (36, 38) de chaque paire étant sur l'arbre principal (12), chaque embrayage étant associé à sa propre paire parmi lesdites paires de pignons, et les embrayages étant actionnables pour effectuer la transmission sélective du couple par l'arbre intermédiaire en passant par l'une (44, 36) ou l'autre (46, 38) desdites paires de pignons; et

lesdits deux arbres intermédiaires (14, 16) comprenant un arbre intermédiaire primaire (14) pour fournir le chemin de couple à arbre intermédiaire unique capable de transmettre l'entraînement entre ledit arbre d'entrée (30) et ledit arbre principal (12), et un arbre intermédiaire secondaire (16) pour transmettre l'entraînement entre ledit arbre principal (12) et ledit arbre de sortie (63) et comportant des pignons d'arbre intermédiaire secondaire (56, 58) en engrènement constant avec lesdits pignons d'arbre principal (36, 60) ainsi qu'un embrayage associé (22), pour permettre la transmission sélective de l'entraînement vers ledit arbre de sortie (63); caractérisé en ce que

ledit arbre principal (12) est coaxial avec ledit arbre d'entrée (30), et un embrayage (24) agissant entre ces arbres fournit un chemin de couple sélectable direct entre eux;

un pignon d'entrée (42) sur ledit arbre intermédiaire primaire (14) est en engrènement constant avec un pignon (40) fixé en entraînement audit arbre d'entrée; et

au moins deux desdits embrayages du type à plaques multiples intercalées (20) dudit arbre intermédiaire (14) sont actionnables indépendamment, pour fournir au moins quatre échelons de ladite séquence échelonnée de changement de couple.

2. Train d'engrenages suivant la revendication 1, caractérisé en ce que lesdits deux embrayages actionnables indépendamment (20, 22) associés audit même arbre intermédiaire (14, 16) constituent un dispositif d'embrayage double du type à plaques multiples intercalées, monté sur ledit même arbre intermédiaire et placé entre les pignons d'arbre intermédiaire associés (44, 46; 56, 58) sur cet arbre.

3. Train d'engrenages suivant la revendication 2, caractérisé en ce que ledit embrayage double (20) est placé sur ledit arbre intermédiaire primaire (14).

4. Train d'engrenages suivant la revendication 3, caractérisé en ce que lesdits pignons (44, 46) dudit arbre intermédiaire primaire, associés audit embrayage double (20), sont montés sur des parties d'arbre intermédiaire (52, 54) qui s'étendent vers l'extérieur à partir dudit embrayage double, au moins l'une (52) desdites parties d'arbre étant tubulaire et une partie d'entrée d'arbre intermédiaire (48) de l'arbre intermédiaire primaire s'étendant dans la partie d'arbre tubulaire et étant connectée audit embrayage double.

5. Train d'engrenages suivant la revendication 4, caractérisé en ce que ledit pignon d'entrée (42) dudit arbre intermédiaire primaire est situé sur ladite partie d'entrée d'arbre intermédiaire (48) de ce dernier.

6. Train d'engrenages suivant la revendication 2, caractérisé en ce que ledit embrayage double (22) est situé sur ledit arbre intermédiaire secondaire (16).

7. Train d'engrenages suivant la revendication 6, caractérisé en ce que lesdits pignons dudit arbre intermédiaire secondaire, associés audit embrayage double, sont montés sur des parties d'arbre intermédiaire s'étendant vers l'extérieur à partir dudit embrayage double, au moins l'une desdits parties d'arbre intermédiaire étant tubulaire, et une partie de sortie d'arbre intermédiaire de l'arbre intermédiaire s'étendant dans la partie d'arbre tubulaire et étant connectée audit arbre de sortie (83) ou formant elle-même celui-ci.

8. Train d'engrenages suivant l'une quelconque des revendications précédentes, caractérisé en ce que lesdits arbres intermédiaires (14, 16) et/ou ledit arbre principal (12) comprennent un embrayage d'extrémité (24).

9. Train d'engrenages suivant l'une quelconque des revendications précédentes, caractérisé par un embrayage d'extrémité et un pignon en engrènement constant associé, montés sur ledit arbre principal ou sur l'un desdits arbres intermédiaires pour fournir une partie sélectable dudit chemin de couple à travers le train d'engrenages.

10. Train d'engrenages suivant l'une quelconque des revendications précédentes, caractérisé en ce que ledit arbre de sortie (63) est directement connecté audit arbre intermédiaire secondaire (16).

11. Train d'engrenages suivant l'une quelconque des revendications précédentes, caractérisé en ce que ledit arbre de sortie (63) est situé à la même extrémité du train d'engrenages que ledit arbre d'entrée (30), de façon à pouvoir être facilement accouplé à un dispositif d'entraînement différentiel d'un véhicule routier à entraînement sur les roues avant.

12. Train d'engrenages suivant la revendication 2, ou l'une quelconque des revendications précédents lorsqu'elles dépendent de la revendication 2, caractérisé en ce que ledit arbre intermédiaire (14) associé audit embrayage double (20) comprend au moins un arbre tubulaire (52, 54) et au moins un arbre intérieur (48) s'étendant dans ledit arbre extérieur, ledit embrayage double comprenant des ensembles intérieurs et extérieurs de plaques d'embrayage intercalées, ledit arbre intérieur étant accouplé audit ensemble ou auxdits ensembles extérieurs de plaques d'embrayage, et ledit arbre ou lesdits arbres tubulaires extérieurs étant accouplés auxdites plaques d'embrayage intérieures.

13. Train d'engrenages suivant l'une quelconque des revendications précédentes, caractérisé en ce que lesdits arbres intermédiaires primaire et secondaire sont disposés coaxialement et sont connectés bout à bout en entraînement direct pour constituer un arbre intermédiaire unique (278).

14. Train d'engrenages suivant la revendication 13, caractérisé en ce que ledit arbre intermédiaire primaire est relié en entraînement audit arbre intermédiaire secondaire par un pignon commun (280).

15. Train d'engrenages suivant la revendication 13 ou la revendication 14, caractérisé en ce que lesdits arbres d'entrée et de sortie du train d'egrenages sont disposés coaxialement l'un par rapport à l'autre et par rapport à des moyens d'embrayage (270, 292) permettant un entraînement direct entre eux.

16. Train d'engrenages suivant la revendication 13, ou la revendication 14, caractérisé en ce que ledit arbre de sortie est situé à l'extrémité opposé du train d'engrenages par rapport audit arbre d'entrée, de façon à convenir pour l'accouplement par un arbre de transmission avant/arrière à un dispositif d'entraînement des roues arrière, et il est coaxial audit arbre intermédiaire unique pour un entraînement direct à partir de celui-ci, ledit arbre arbre de sortie étant décalé vers le bas, dans l'attitude de travail du dispositif, par rapport à l'arbre principal, ce qui réduit l'exigence de logement dudit arbre de transmission dans une structure de châsis de véhicule routier.

17. Train d'engrenages suivant l'une quelconque des revendications précédentes, caractérisé en ce qu'un embrayage (24) fournissant un entraînement direct entre ledit pignon (40) dudit arbre d'entrée (30) et ledit arbre principal (12), est placé vers l'extérieur, par rapport à l'ensemble du train d'engrenages (10), dudit pignon (40) de l'arbre d'entrée.

18. Véhicule routier rapide, caractérisé par une transmission d'entraînement comprenant un train d'engrenages suivant l'une quelconque des revendications précédentes, ainsi qu'un équipment de commande automatique ou semi-automatique pour effectuer des changements de rapport.

19. Véhicule suivant la revendication 18, caractérisé en ce que l'entrée d'entraînement vers ledit train d'engrenages à partir du moteur du véhicule s'effectue par l'intermédiaire de moyens d'accouplement élastique (28).

FIG.3

FIG.1

FIG.2

EP 0 214 972 B1

FIG.4

FIG.7

FIG.10

FIG.11

FIG.12

2

FIG.6

86

80 82 72

102 104 94 92 96

78

70

98

90

74 88 100

76

FIG.5

FIG.9

FIG.8

EP 0 214 972 B1

FIG.13

FIG.15

FIG.16

FIG.17

5

FIG.14